Europäisches Patentamt

European Patent Office

Office européen des brevets

(11) Publication number: **0 235 404 B1**

# EUROPEAN PATENT SPECIFICATION

(45) Date of publication of patent specification: **13.05.92**    (51) Int. Cl.⁵: **G01N 21/35**

(21) Application number: **86202126.8**

(22) Date of filing: **01.12.86**

(54) **Method and device for determining the spatial distribution of a gas.**

(30) Priority: **05.12.85 NL 8503360**

(43) Date of publication of application:
**09.09.87 Bulletin 87/37**

(45) Publication of the grant of the patent:
**13.05.92 Bulletin 92/20**

(84) Designated Contracting States:
**AT BE CH DE ES FR GB GR IT LI LU NL SE**

(56) References cited:
**US-A- 3 925 666**

**APPLIED OPTICS, vol. 21, no. 24, December 1982, pages 4417-4420, Optical Society of America, New York, US; U. PERSSON et al.: "Ethylene mass flow measurements with an automatic CO2 laser long-path absorption system"**

(73) Proprietor: **NEDERLANDSE ORGANISATIE VOOR TOEGEPAST-NATUURWETENSCHAPPELIJK ONDERZOEK TNO**
**Juliana van Stolberglaan 148**
**NL-2595 CL The Hague(NL)**

(72) Inventor: **Ter Kuile, Willem Maurits**
**Laan van Overvest 48**
**NL-2613 DM Delft(NL)**

(74) Representative: **van der Beek, George Frans, Ir. et al**
**Nederlandsch Octrooibureau Scheveningseweg 82 P.O. Box 29720**
**NL-2502 LS 's-Gravenhage(NL)**

## Description

The invention relates to a gas measuring system comprising an infrared radiation source, a back reflector situated at a distance from said source, a receiver situated near the source, a detector, first focusing means for the formation of an image of a part of the back reflector and a narrow-band spectral filter.

Such a system is known from US-A-3,925,666 and said system is designed to, and suitable for, detecting the presence of a specific harmful gas and determining the quantity of said gas and the position of the gas leak. The radiation source is an infrared laser with a very narrow spectral band (width less than 1 Å ($10^{-10}$ meter)), so that the system can be used only for detecting a certain gas, in particular hydrogen sulphide. General use is out of the question. Another disadvantage of the known gas detector system is that it cannot provide a two-dimensional image of the distribution of the gas concerned in the space at a certain instant in time. In order to obtain adequate information rapidly about the distribution of the gas (to estimate the size of a gas leak) and the movement of a gas cloud (to estimate the human exposure) in a space, two-dimensional images of the gas distribution are in fact necessary at certain instants in time.

The object of the invention is to provide a system defined in the introduction which does not have the said drawbacks, which consequently has a very general field of application, which can produce images of the distribution of the gas in the space (for example, on a display screen), and with which the quantity of gas in a certain part of the space can be measured.

According to the invention the gas measuring system which is defined in the introduction is characterized for the purpose in that the infrared radiation source is a thermal radiator, that the back reflector comprises a screen of relatively large surface, the front face of which is constructed from a large number of faces covered with opaque reflection material or formed therefrom and intersecting each other at an angle, that said spectral filter is installed at the position where said first focusing means form an image and that second focusing means are present for focusing the radiation which has passed through the filter on the input of the detector, that the spectral filter is adjustable in a manner such that measurements can be made consecutively in the absorption band of the gas concerned and outside the absorption band, and that a signal processor is added to the system, which processor is provided With an analogue/digital converter for converting voltage signals originating from the detector into numbers, computing means for dividing every number which corresponds to the radiation intensity measured in the absorption band concerned by a number which corresponds to the radiation intensity measured outside the absorption band concerned (differential absorption spectrometry), and means for converting the quotients into grey-value or colour-value levels and forming a two-dimensional image thereof.

In addition to visible radiation, the thermal radiator provides infrared radiation with wavelengths between 2.5 urn and 14.5 $\mu$m (1 $\mu$m is $10^{-6}$ m) and can therefore be used for detecting very many gases by means of differential infrared absorption spectrometry. The screen is necessary in order to reflect radiation from the thermal radiator over a large area back to the input of the scanner which is situated near the radiator. By means of the first focusing means an intermediate image of a part of the reflector screen can be formed on the fitter. For example, said intermediate image has an area dimension of approx. 1 mm$^2$. Over said small area the filter has the properties of a narrow-band spectral filter. An image of the said part of the reflector screen must, of course, be formed on the detector. This purpose is served by the second focusing means which operate in a manner such that the field of view of the detector, which is limited by a diaphragm, will be filled entirely with radiation.

In order to be able to carry out a differential measurement if the absorption bands of the gases present are known, the spectral fitter is consecutively adjusted in a manner such that the narrow wavelength band of the radiation transmitted corresponds to an undisturbed absorption band of the gas to be measured and corresponds to a wavelength band where none of the gases present absorbs.

The receiver is preferably provided with scanning mirrors with which scanning can be carried out in the horizontal direction over, for example, 30° and in the vertical direction over, for example, 10°. The possibility is not ruled out of using, instead of a scanning mechanism with rotating mirrors and/or oscillating mirrors, an array of detectors, a set of gas-specific interference filters being employed.

The use of scanning mirrors in a system for detecting harmful gases is indeed known per se from US-A-4,555,627. In this known system an image is also formed. However, there is no back-reflecting screen, nor is there a thermal radiator. In said known system, the infrared radiation generated by a laser is reflected back by the fortuituous background and attenuated by the gas cloud to be detected. The image formed will thus contain information which is independent of the relevant absorption by gas molecules and will be unsuitable for determining the quantity of gas. There is no mention of differential absorption spectrometry.

From "Patent Abstracts of Japan", vol. 7, No. 23 (P-171) [1168], 29th January 1983, the visualization of the distribution of methane in a space is known, in which process use is made of infrared laser radiators, a scanning mirror, a narrow-band fitter, a detector and a signal processor with display screen. Because of the laser radiators, said known system is only suitable for detecting a specific gas, in this case methane. The image formed on the detector is that of a part of a reflecting surface which is not constructed as a back reflector. An image is not first formed on the fitter and then an image on the detector. The filter is not movable or adjustable. Moreover, in the Abstract there is no mention of differential absorption spectrometry. The image formed will therefore contain information which is independent of the relevant absorption by gas molecules and consequently will be unsuitable for determining the quantity of gas.

A back-reflecting screen for infrared radiation is known per se from US-A-4,082,414.

In a paper entitled "Ethylene mass flow measurements with an automatic $CO_2$ laser long-path absorption system", the journal "Applied Optics" vol. 21, No. 24, 15th December 1982, pages 4417-4420, describes the differential absorption measurement of gases in which the result of a measurement in the absorption band of the gas conconcerned is always divided by the result of a measurement outside the absorption band. Use is made of laser radiators and not of thermal radiators. There is no mention of forming a two-dimensional image.

The article entitled "Remote measurement of gases using differential-absorption lidar" in the journal "Optical Engineering", vol. 17, No. 1, February 1978, pages 30-33 gives a summary of the state of the art relating to the detection and measurement of gases at a distance. Laser radiators are always used. The telescope is always directed at a reflector (for example, a back reflector) and, in particular, at the same point as that at which the laser is directed. No scanning takes place and there is no signal processor for forming numbers from the electrical signals of the detector and for converting these numbers after division into a two-dimensional image of the gas distribution. From said article the employment of differential absorption spectrometry is in fact known, a measurement in the absorption band of the gas concerned being compared with a measurement outside the absorption band.

Preferably, scanning is carried out in the horizontal direction over approximately 30º and in the vertical direction over 10º, the scanning mechanism scanning the image line by line and it being possible for a complete scan to be produced within one second. The mirror for carrying out a horizontal scan consists, for example, of a mirror rotor in the form of a pyramid with at least three side faces. For the vertical scan use is made, for example, of an oscillating mirror, the drive of which is synchronized with respect to the drive of the mirror rotor. The synchronization between mirror rotor and oscillating mirror could be carried out completely electronically, but the drive of the oscillating mirror can also be coupled mechanically to the drive motor of the mirror rotor.

The filter may consist of a rotatable disc on which fitter segments in the shape of a circular arc are mounted, the peak transmission wavelength varying with the angle.

The narrow wavelength range of the transmitted radiation can be adjusted by rotating (for example, with a stepping motor) the fitter wheel which functions as a monochromator. On said wheel there are mounted, for example, three filter segments, the wavelength range of the three segments running, for example, respectively from 2.5 $\mu$m to 4.5 $\mu$m, 4.5 $\mu$m to 8.0 $\mu$m and 7.9 $\mu$m to 14.5 $\mu$m A small adjusted section of a chosen segment is used to produce the intermediate image thereon. The wavelength of said section essentially corresponds to the wavelength of an absorption band of the gas to be scanned. Virtually all the gases encountered in practice have absorption bands in the infrared part of the electromagnetic spectrum (1-20 $\mu$m).

On the other hand, other monochromators may also be suitable such as a diffraction spectrometer, a Michelson interferometer with computer, and separate "narrow band-pass" filters.

A semiconductor detector cooled with liquid nitrogen is to be preferred. However, other detectors are not out of the question.

The invention will now be explained in more detail on the basis of the figures.

Figure 1a shows a diagrammatic view in perspective of the gas cloud scanner according to the invention with radiator and back-reflecting screen.

Figure 1b shows a variant of the embodiment of the screen.

Figure 2 shows a side view of the receiver.

Figure 3 shows a plan view of the receiver.

Figure 4 shows a cross-section.

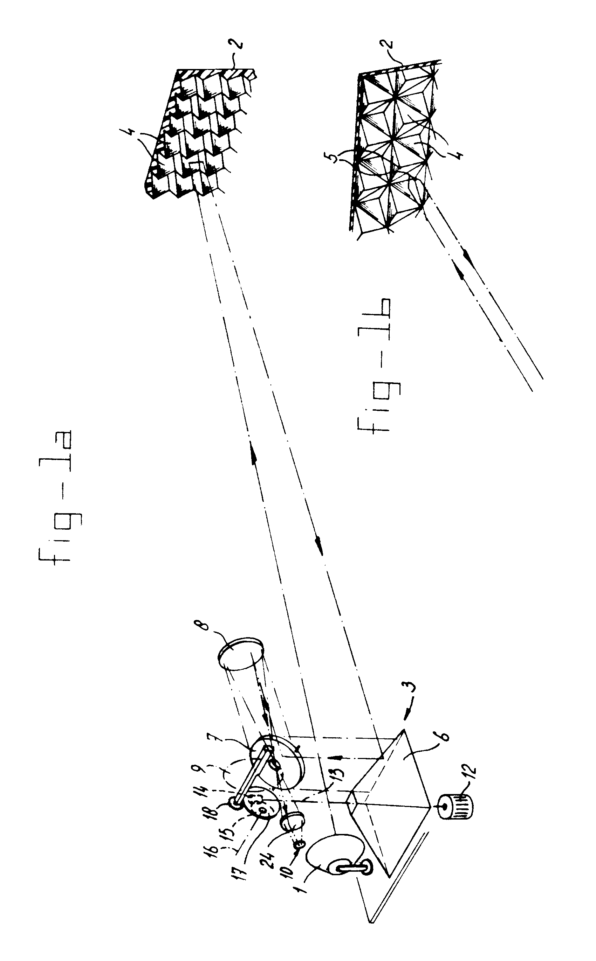

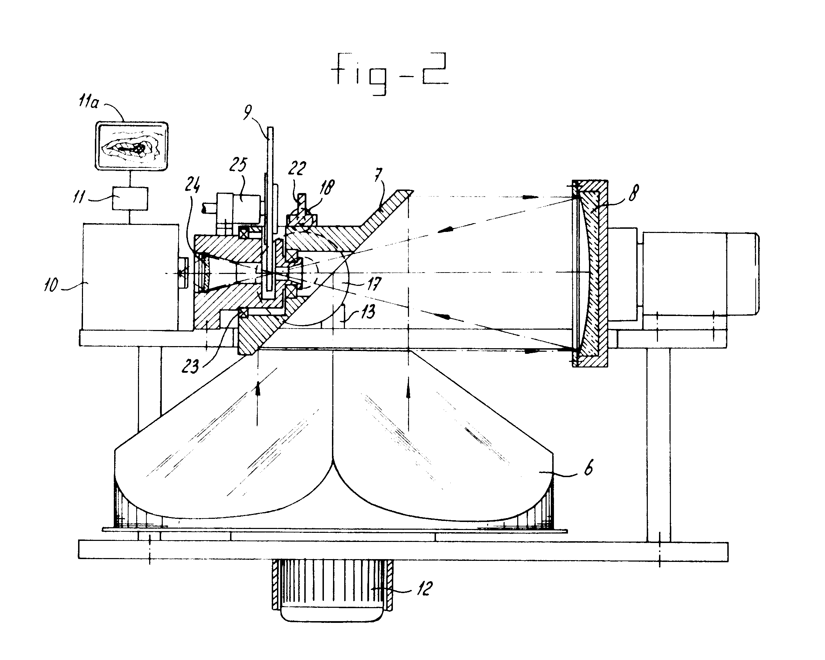

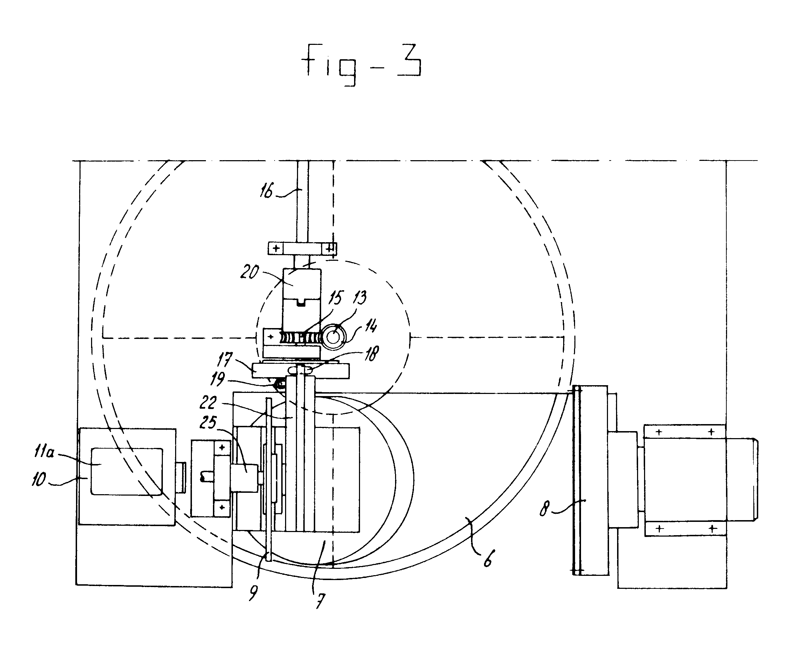

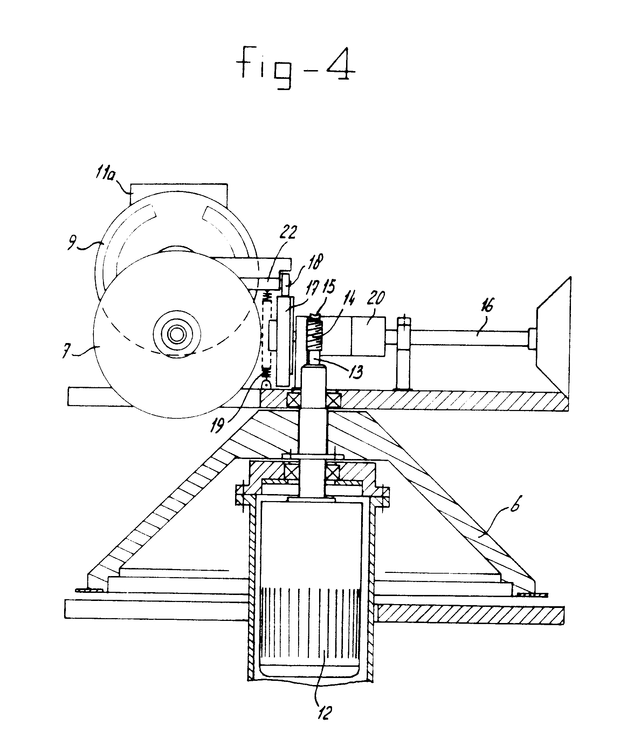

For clarity, in Figure 1a the components 7 to 24 incl. have been rotated around a vertical axis through 90º with respect to the reproduction in Figures 2, 3 and 4.

The diagrammatic Figure 1 shows an infrared radiator 1 which irradiates a back-reflecting screen 2 situated at a distance. The radiator is situated near a receiver 3 which scans the space between radiator and screen both in the horizontal and in the vertical direction and images the reflected light on a filter which filters out the frequencies of the infrared radiation with the exception of the frequency range to be absorbed by a gas cloud. The infrared absorption caused by any gas cloud present is determined with a detector. A "photo" of the gas cloud is obtained on the basis of said measurements by means of an amplifier and computer.

The back-reflecting screen is provided with a large number of smaller cube corners 4 which are placed directly next to each other in a manner such that the vertex 5 is recessed furthest to the rear. The cube corners and the rear wall, to which the cube corners are joined, are manufactured from plastic material, a reflecting aluminium layer having been vapour-deposited on the cube faces which point forwards. As is evident from Figure 1, the direction of a ray incident on the screen is changed three times by reflection and returns in a direction which is essentially parallel to the incident direction. Because the cube corners 4 are recessed and the front faces are provided with a reflecting layer, the infrared radiation originating from the radiator 1 is virtually not absorbed in the plastic material of the screen. The back reflector according to the invention has a small scattering of the returning beam and the back-reflecting principle operates well: the reflected radiation falls within a circle having a small diameter around the source. The maximum differences in the reflection properties are approximately 20%. The effect of said differences on the final result is eliminated by use of the differential absorption method described.

Figure 1b shows an embodiment of the cube corners which differs somewhat from the embodiment according to Figure 1a.

If the infrared radiation passes through a gas cloud, a certain frequency band of the spectrum will be absorbed. By allowing said radiation to fall through a filter which filters out radiation frequencies apart from the frequency band possibly to be absorbed by a gas cloud, a radiation beam is obtained, the frequency of which corresponds to the absorption frequency of the gas cloud possibly present. The intensity of the radiation is measured by the detector. In order to eliminate the information independent of the wavelength, a second measurement is carried out in a frequency range which is situated next to the absorption range and both measurements are divided by each other. Such a differential absorption method is carried out by means of a scanning mechanism, to be described in more detail, in the solid angle between the receiver and the screen, the measurements being processed into a "photo" after amplification in a computer. Said photo is a two-dimensional image of the distribution of a harmful gas or vapour in the space. A complete scan is carried out, for example, within 1 second. By comparing different consecutive photos with each other, an impression can be obtained of the movement of the gas cloud in the space. The back-reflecting screen described above for infrared radiation forms an essential component of the necessary facilities.

The receiver shown in Figures 2 to 4 incl. comprises a rotatable mirror 6 in the form of a truncated 4-sided pyramid, an oscillating mirror 7, a focusing mirror 8, a fitter disc 9, a detector, and a signal processor 11 with display screen 11a.

The pyramidal mirror 6, which is intended for the horizontal scanning of the space, is driven by a motor 12. The driven motor spindle 13 is also used to drive the oscillating mirror 7 via a transmission system. Said transmission system comprises a worm 14 mounted on the motor spindle, a worm wheel 15 which is in mesh therewith and which is mounted on a spindle 16 which carries an eccentrically situated cam disc 17 at its end. A cam wheel 18 is pressed against the said cam disc 17 by means of a spring 19 which extends between a frame part 21 and an arm 22 which is attached to the rear side of the oscillating mirror 7. In the spindle there is mounted a claw clutch 20 by means of which the drive of the oscillating mirror can be switched over to manual operation. The oscillating mirror 7 is mounted with respect to the frame by means of bearings 23. It will be clear that, when spindle 13 is rotating, not only the pyramidal mirror 6 is rotated, but the mirror 7 also undergoes an oscillatory movement. This oscillatory movement is produced because the cam wheel 15 moves up and down during its movement along the eccentric disc 17. The movement is always uniform (no sinusoidal movement).

The infrared radiation reflected by the screen 2 strikes the rotating mirror 3 which reflects the radiation onto the oscillating mirror 7 which reflects the radiation onto the concave focusing mirror 6 which forms an image of the relevant part of the screen 2 on the filter disc 9.

Between the filter disc 9 and the detector 10 there is situated a germanium lens 24 which also forms an image of the relevant part of the screen 2 on the detector and ensures that the beam fills the opening of the detector. The fitter disc is brought by a computer-controlled stepping motor 25 consecutively into the position in which the radiation of the absorption frequency of the harmful gas possibly present and radiation of an absorption range situated next to it are transmitted. The consecutive measurements resulting therefrom are necessary in order to be able to carry out the differential absorption measurement described above and thereby to be able to suppress the effect of information which is independent of the wavelength and the like. The detector converts the radiation received into electrical voltage signals which are processed in the manner indicated above by means of the signal processor 11 to form a two-dimensional image (photo) of the gas cloud on the display screen 11a. An image scan is obtained within 1 second and the computer processes the measurement data into a photo within 1 minute. Said processor 11 comprises an analogue/digital converter which converts the voltage signals into numbers, and computing means for dividing every number which corresponds to the radiation intensity measured in the absorption band of the gas by a number which corresponds to the radiation intensity outside the absorption band. In addition, these quotients are converted into grey-value levels or cotour levels which form the desired image on the display screen 11a.

The measurement is based on the knowledge that the intensity of the absorption is a measure of the quantity of harmful gas in the path of the infrared radiation. This dependency is governed by the Lambert-Beer law:

$I(\lambda) = I_0(\lambda) \exp(-\alpha(\lambda)1c)$.

$I_0$ = intensity without absorption,

$I$ = intensity with absorption,

$\alpha(\lambda)$ = absorption coefficient (dependent on the material and the wavelength),

$l$ = the absorption path length,

$c$ = the concentration,

$\lambda$ = the wavelength.

$I_0$ is not constant as a result of fluctuations in radiation intensity, interfering radiation from the sun and certain machines, differences in the reflection power of the parts of the reflector and differences in the position and angle of irradiation. These variations are eliminated by the differential absorption measurement already mentioned in which a second measurement at another wavelength is made at the same time and/or at the same position and this measurement is divided by the first measurement:

$$I^{*} = \frac{I_0(\lambda_1) \exp(-\alpha(\lambda_1)1c)}{I_0(\lambda_2) \exp(-\alpha(\lambda_2)1c)}$$

By taking the logarithm of this comparison the difference of two logarithms is obtained in the right hand turn.

On the other hand, the measurement in the absorption band concerned and the measurement outside the band can also be carried out at the same time instead of consecutively. A second detector is then necessary.

The filter disc 9 consists of a rotatable disc which is provided, for example, with three filter segments, viz. a fitter segment with a transmitted wavelength range of 2.5 - 4.5 $\mu$m, a filter segment with a transmitted wavelength range of 4.5 - 8.0 $\mu$m and a segment with a transmitted wavelength range of 7.9 - 14.5 $\mu$m.

It will be clear that the peak transmission wavelength varies with the position on the segments having the form of a circular arᴼᴼ

The detector 10 is preferably a semiconductor detector which has a favourable signal/noise ratio and a high sensitivity. However, this type of detector has to be cooled with nitrogen.

On the other hand, the scanning mechanism could be dispensed with if use is made of an array of detectors, the image having as many pixels as there are detectors in the array. As yet a single detector combined with a scanning mechanism is preferable, scanning being carried out horizontally over 30º and vertically over 10º. This preference might change in the future. The scanning mechanism scans the image line by line. The beam is incident on the faces of the pyramidal scan rotor 6 at an angle of 45º with respect to the axis of symmetry and is reflected parallel to the said axis. A horizontal scanning angle of 30º corresponds to a rotational angle of 30º of the rotor. Both the mirror rotor 6 and the oscillating mirror 7 are preferably manufactured from aluminium.

The gas cloud scanner in fact measures the quantity of gas in the radiation path and not the gas concentration. However, the average gas concentration can be calculated after calibration.

It is essential for the invention that an infrared radiator and a back-reflecting screen are situated at a distance from each other and that the reflected infrared radiation is picked up in a receiver near the radiator, the absorption of infrared radiation caused by any gas cloud present being measured and the differential measurement results being processed by a signal processor into a two-dimensional image of the cloud. Moreover, the construction of the infrared back-reflecting screen is of essential importance for the invention.

Within the scope of the invention various modifications are possible. As is evident from the above, in particular, the scanning mechanism with rotating mirror for the horizontal scan and an oscillating mirror for the vertical scan could be replaced by an array of detectors; in that case a set of interference filters is employed.

The gas cloud scanner described is in general intended for determining the distribution of a harmful gas, but the distribution of a tracer gas can also be determined with the aid of the invention. Tracer gas is used, for example, to investigate how the ventilation in a certain space proceeds. The scanner is suitable for measuring all the gases which have sufficiently strong absorption lines in the infrared part of the spectrum at wavelengths between 2.5 $\mu$m and 14.5 $\mu$m. Gases which are suitable, inter alia, are combustion gases, carbon monoxide, nitrogen oxides, carbon tetrachloride, benzene, trichloroethylene, sulphur dioxide and ammonia.

**Claims**

1. Gas measuring system comprising an infrared radiation source (1), a backreflector (2) situated at a distance from said source (1) a receiver (3) situated near the source (1), a detector (10), first focusing means (8) for the formation of an image of a part of the back reflector (2) and a narrow-band spectral filter (9), characterized in that the infrared radiation source (1) is a thermal radiator (1), that the back reflector (2) comprises a screen (2) of relatively large surface, the front face of which is constructed from a large number of faces covered with opaque reflection material or formed therefrom and intersecting each other at an angle, that said spectral filter (9) is installed at the position where said first focusing means (8) form an image and that second focusing means (24) are present for focusing the radiation which has passed through the filter (9) on the input of the detector (10), that the spectral filter (9) is adjustable in a manner such that measurements can be made consecutively in the absorption band of the gas concerned and outside the absorption band, and that a signal processor (11) is added to the system, which processor (11) is provided with an analogue/digital converter for converting voltage signals originating from the detector (10) into numbers, computing means for dividing every number which corresponds to the radiation intensity measured in the absorption band concerned by a number which corresponds to the radiation intensity measured outside the absorption band concerned, and means for converting the quotients into grey-value or colour-value levels and forming a two-dimensional image thereof.

2. System according to Claim 1, characterized in that the system is moreover provided with a mirror (6), rotatable or oscillatable about a vertical axis, for carrying out a horizontal scan, a mirror (7), rotatable or oscillatable about a horizontal axis, for carrying out a vertical scan, and drive means (12) for both mirrors.

3. System according to Claim 2, characterized in that the mirror (6) for carrying out a horizontal scan consists of a mirror rotor in the form of a pyramid with at least three side faces.

4. System according to Claim 2, characterized in that the mirror (7) for carrying out a vertical scan consists of an oscillating mirror, the drive of which is synchronized with respect to the drive of the mirror rotor (6).

5. System according to Claim 4, characterized in that the drive of the oscillating mirror (7) is mechanically coupled to the drive motor (12) of the mirror rotor (6).

6. System according to Claim 1, characterized in that said first means (8) for focusing and imaging consist of a concave mirror and said second means for focusing and imaging consist of a lens (24) placed between the filter and detector.

6

**7.** System according to one of the preceding Claims, characterized in that the filter (9) consists of a rotatable disc on which fitter segments in the form of a circular arc are mounted, the peak transmission wavelength varying with the angle.

**8.** System according to one of the preceding Claims, characterized in that the detector (10) is a semiconductor detector cooled with liquid nitrogen.

**Revendications**

**1.** Système de mesure de gaz comprenant une source (1) de radiation d'infrarouges, un rétro-réflecteur (2) situé à distance de ladite source (1), un récepteur (3) situé à proximité de la source (1), un détecteur (10), des premiers moyens (8) de focalisation pour la formation d'une image d'une partie du rétro-réflecteur (2) et un filtre spectral (9) à bande étroite, caractérisé en ce que la source (1) de radiation d'infrarouges est un radiateur thermique (1), en ce que le rétro-réflecteur (2) consiste en un écran (2) de surface relativement grande, dont la face antérieure est constituée d'un grand nombre de faces recouvertes d'une matière opaque de réflexion ou réalisées en cette dernière et se coupant les unes les autres en inscrivant un angle, en ce que ledit filtre spectral (9) est monté à l'emplacement auquel lesdits premiers moyens (8) de focalisation forment une image et en ce que des seconds moyens (24) de focalisation sont destinés à focaliser la radiation qui a passé à travers le filtre (9) pour parvenir sur l'entrée du détecteur (10), en ce que le filtre spectral (9) est réglable de manière que des mesures puissent être effectuées consécutivement dans la bande d'absorption du gaz concerné et en dehors de la bande d'absorption et en ce qu'un processeur (11) de signaux est ajouté au système, ledit processeur (11) est équipé d'un convertisseur analogique-numérique de conversion de signaux en tension provenant du détecteur (10) en nombres, des moyens de calcul pour diviser chaque nombre qui correspond à l'intensité de la radiation mesurée dans la bande d'absorption concernée par un nombre qui correspond à l'intensité de la radiation mesurée en dehors de la bande d'absorption concernée et des moyens pour convertir les quotients en niveaux de valeur neutre ou de valeur de couleur et pour en former une image bidimensionnelle.

**2.** Système selon la revendication 1, caractérisé en ce que le système est de plus équipé d'un miroir (6) qui est rotatif ou oscillant autour d'un axe vertical et qui est destiné à exécuter un balayage horizontal, un miroir (7) rotatif ou oscillant autour d'un axe horizontal et destiné à exécuter un balayage vertical et des moyens (12) de commande des deux miroirs.

**3.** Système selon la revendication 2, caractérisé en ce que le miroir (6) destiné à effectuer un balayage horizontal consiste en un rotor à miroirs ayant la forme d'une pyramide à au moins trois faces latérales.

**4.** Système selon la revendication 2, caractérisé en ce que le miroir (7) destiné à effectuer un balayage vertical consiste en un miroir oscillant dont la commande est synchronisée avec la commande du rotor à miroirs (6).

**5.** Système selon la revendication 4, caractérisé en ce que la commande du miroir oscillant (7) est couplée mécaniquement au moteur (12) de commande du rotor à miroirs (6).

**6.** Système selon la revendication 1, caractérisé en ce que lesdits premiers moyens (8) de focalisation et de formation d'une image consistent en un miroir concave et lesdits seconds moyens de focalisation et de formation de l'image consistent en une lentille (24) placée entre le filtre et le détecteur.

**7.** Système selon l'une des revendications précédentes, caractérisé en ce que le filtre (9) consiste en un disque rotatif sur lequel des segments de filtrage ayant la forme d'un arc circulaire sont montés, la longueur d'onde de la transmission de pointe variant avec l'angle.

**8.** Système selon l'une des revendications précédentes, caractérisé en ce que le détecteur (10) est un détecteur à semiconducteurs refroidi à l'azote liquide.

**Patentansprüche**

1. Vorrichtung zum Messen von Gas umfassend eine Infrarot-Strahlungsquelle (1), einen in einem Abstand von der Quelle (1) angeordneten Rückreflektor (2), einen in der Nähe der Quelle (1) angeordneten Empfänger (3), einen Detektor (10), erste Fokussiermittel (8) zum Erzeugen eines Bildes eines Teils des Rückreflektors (2), und ein Schmalband-Spektralfilter (9), **dadurch gekennzeichnet,** daß die Infrarot-Strahlungsquelle (1) ein thermischer Strahler (1) ist, daß der Rückreflektor (2) einen Schirm (2) mit relativ großer Oberfläche umfaßt, dessen Vorderfläche aus einer großen Anzahl von mit einem opaken Reflektionsmaterial bedeckten oder daraus gebildeten und sich gegenseitig unter einem Winkel schneidenden Flächen gebildet ist, daß das Spektralfilter (9) an der Stelle eingebaut ist, an der das erste Fokussiermittel (8) ein Bild erzeugt, und daß zweite Fokussiermittel (24) vorhanden sind zum Fokussieren der Strahlung, die durch das Filter (9) am Eingang des Detektors (10) hindurchgetreten ist, daß das Spektralfilter (9) einstellbar ist derart, daß Messungen aufeinanderfolgend im Absorptionsband des betreffenden Gases und außerhalb des Absorptionsbands durchgeführt werden können, und daß der Vorrichtung ein Signalprozessor (11) hinzugefügt ist, welcher Prozessor (11) mit einem Analog/Digital-Wandler zum Umwandeln von von dem Detektor (10) stammenden Spannungssignalen in Zahlen, Berechnungsmitteln zum Dividieren jeder Zahl, die der im betreffenden Absorptionsband gemessenen Strahlungsintensität entspricht, durch eine Zahl, die der außerhalb des betreffenden Absorptionsbands gemessenen Strahlungsintensität entspricht, und Mittel zum Umwandeln der Quotienten in Grauwert- oder Farbwert-Pegel und Erstellen eines zweidimensionalen Bildes daraus versehen ist.

2. Vorrichtung nach Anspruch 1, **dadurch gekennzeichnet** daß die Vorrichtung weiter mit einem um eine vertikale Achse drehbaren oder oszillierbaren Spiegel (6) zur Durchführung einer horizontalen Abtastung, einem um eine horizontale Achse drehbaren oder oszillierbaren Spiegel (7) zur Durchführung einer vertikalen Abtastung und Antriebsmittel (12) für beide Spiegel versehen ist.

3. Vorrichtung nach Anspruch 2, **dadurch gekennzeichnet,** daß der Spiegel (6) zur Durchführung einer horizontalen Abtastung aus einem Spiegel-Rotor in Form einer Pyramide mit wenigstens drei Seitenflächen besteht.

4. Vorrichtung nach Anspruch 2, **dadurch gekennzeichnet,** daß der Spiegel (7) zur Durchführung einer vertikalen Abtastung aus einem oszillierenden Spiegel besteht, dessen Antrieb bezüglich des Antriebs des Spiegel-Rotors (6) synchronisiert ist.

5. Vorrichtung nach Anspruch 4, **dadurch gekennzeichnet,** daß der Antrieb des oszillierenden Spiegels (7) mit dem Antriebsmotor (12) des Spiegel-Rotors (6) mechanisch gekoppelt ist.

6. Vorrichtung nach Anspruch 1, **dadurch gekennzeichnet,** daß die ersten Mittel (8) zum Fokussieren und Abbilden aus einem Konkav-Spiegel bestehen und die zweiten Mittel zum Fokussieren und Abbilden aus einer zwischen Filter und Detektor angeordneten Linse (24) bestehen.

7. Vorrichtung nach einem der vorhergehenden Ansprüche, **dadurch gekennzeichnet,** daß das Filter (9) aus einer drehbaren Scheibe besteht, auf der Filter-Segmente in Form eines Kreisbogens gehaltert sind, wobei sich die Spitzen-Transmissionswellenlänge mit dem Winkel ändert.

8. Vorrichtung nach einem der vorhergehenden Ansprüche, **dadurch gekennzeichnet,** daß der Detektor (10) ein mit flüssigem Stickstoff gekühlter Halbleiter-Detektor ist.

fig-1a

fig-1b

# fig-2

EP 0 235 404 B1

Fig-3

fig-4